# EUROPÄISCHE PATENTSCHRIFT

(11) **EP 3 344 793 B1**
(45) Veröffentlichungstag und Bekanntmachung des Hinweises auf die Patenterteilung: **13.04.2022**
(21) Anmeldenummer: 16763718.0
(22) Anmeldetag: 11.08.2016
(51) Int. Cl.: C23C 8/66, C21D 6/00, B22F 1/00, C21D 8/02, G01N 29/30, C21D 1/74

(54) **VERFAHREN ZUR HERSTELLUNG EINES KALIBRIERKÖRPERS**
METHOD FOR PRODUCING A CALIBRATION BODY
PROCÉDÉ DE PRODUCTION D'UN BLOC D'ÉTALONNAGE

(30) Priorität: 04.09.2015 DE 102015114831
(43) Veröffentlichungstag der Anmeldung: 11.07.2018
(73) Patentinhaber: Aktiengesellschaft der Dillinger Hüttenwerke, 66763 Dillingen/Saar (DE)
(72) Erfinder: BALDAUF, Bernd, 66773 Schwalbach (DE); WILD, Daniel, 66839 Hüttersdorf (DE); RUPP, Daniel, 66740 Saarlouis (DE)
(74) Vertreter: Patentanwälte Bernhardt / Wolff Partnerschaft mbB
(86) Internationale Anmeldenummer: PCT/DE2016/100359
(87) Internationale Veröffentlichungsnummer: WO 2017/036443

(56) Entgegenhaltungen:
- WO-A1-2007/097727
- DE-A1- 10 139 553
- DE-A1- 10 156 326
- DE-A1-102006 049 015
- DE-B4- 10 139 553

## Beschreibung

Die Erfindung betrifft ein Verfahren zur Herstellung eines, insbesondere aus Stahl oder einem anderen Metall gebildeten, Kalibrierkörpers für ein Untersuchungsverfahren, bei dem der Kalibrierkörper aus einem Material gebildet wird und eine Eigenschaft des Materials in mindestens einem Bereich eines aus dem Material gebildeten Halbzeugs verändert wird, wobei das Material, aus dem der Kalibrierkörper gebildet wird, zur Herstellung eines mittels des Oberflächenuntersuchungsverfahrens zu untersuchenden Erzeugnisses vorgesehen ist.

Die WO 2007/097 727 beschreibt ein Verfahren zur Herstellung von Standardtestblocks aus Stahl, Superlegierungen oder Titanlegierungen für Ultraschallinspektionsverfahren. Zur Herstellung der Standardtestblocks werden an den Oberflächen zweier Testblockteile künstliche Defekte verschiedener Arten gebildet, anschließend die mit den Defekten versehenen Oberflächen aufeinandergelegt und die beiden Testblockteile durch Vakuumheißpressen oder heißisostatisches Pressen miteinander verbunden.

Aus der DE 101 39 553 A1 geht ein Verfahren zur Herstellung einer Materialbibliothek aus Oberflächenbereichen mit verschiedenen Eigenschaften hervor, bei dem Gemische aus Substanzen nach einem kombinatorischen Verfahren auf ein Substrat aufgebracht werden. Als Substrat kann ein metallischer Werkstoff vorgesehen sein und chemische Reaktionen zwischen den Gemischen und dem metallischen Substrat ablaufen.

Die DE 10 2006 049 015 A1 beschreibt ein Halbzeug aus Stahl oder einer Stahllegierung, welches für eine Umformung vorgesehen ist. Das Halbzeug weist mindestens einen verstärkten Bereich mit einer Sandwichstruktur auf.

Bei einem durch Benutzung bekannten Herstellungsverfahren werden in einen Kalibrierkörper für eine Ultraschallprüfeinrichtung zur Detektierung von Materialdefekten an unterschiedlichen Positionen gezielt Bohrungen verschiedener Größe eingebracht. Allerdings sind solche Kalibrierkörper zur Kalibrierung anderer Untersuchungseinrichtungen, insbesondere zur Wirbelstromprüfung, ungeeignet.

Der Erfindung liegt die Aufgabe zugrunde, ein Verfahren der eingangs genannten Art zu schaffen, mit dem ein Kalibrierkörper hergestellt werden kann, der eine Kalibrierung weiterer Untersuchungseinrichtungen ermöglicht.

Erfindungsgemäß wird die Aufgabe dadurch gelöst, dass die Materialeigenschaft lediglich in einem oberflächennahen, sich von einer Oberfläche des Kalibrierkörpers aus in das Halbzeug hinein erstreckenden Bereich verändert wird und der lediglich in dem Bereich veränderte Kalibrierkörper für ein Oberflächenuntersuchungsverfahren vorgesehen wird, wobei der Kalibrierkörper nach einem Produktionsverfahren hergestellt wird, das mindestens einen gleichen Verfahrensschritt wie ein Fertigungsverfahren aufweist, nach dem das zu untersuchende Erzeugnis gefertigt wird.

Die Materialeigenschaft in dem Bereich des Halbzeugs wird verändert, um in dem Kalibrierkörper eine Materialänderung, insbesondere eine Änderung der chemischen Zusammensetzung und/oder einen Defekt, nachzubilden, die mittels des Untersuchungsverfahrens in dem zu untersuchenden Erzeugnis aufgefunden werden soll. Da der Kalibrierkörper aus dem gleichen Material wie das Erzeugnis gebildet ist, d.h. z.B. aus dem gleichen Metall, einem Stahl derselben Stahlklasse oder einem Material der gleichen chemischen Zusammensetzung, lässt sich in dem Kalibrierkörper besonders genau die im Erzeugnis auftretende Materialänderung nachbilden. Ferner weist der Kalibrierkörper außer in dem Bereich der Materialänderung die gleichen oder zumindest ähnliche Eigenschaften wie das Erzeugnis auf, so dass die Kalibrierung mit Hinblick auf die Materialänderung vorgenommen werden kann. Fehler bei der Kalibrierung, die z.B. durch Verwendung unterschiedlicher Herstellungsmaterialien für den Kalibrierkörper und das Erzeugnis hervorgerufen werden könnten, lassen sich dadurch vermeiden. Vorteilhaft können in dem Erzeugnis auch Materialänderungen erfasst werden, die bisher nicht detektiert werden konnten. Der Kalibrierkörper eignet sich insbesondere auch zur Kalibrierung von Untersuchungseinrichtungen der Wirbelstromprüfung, die zum Auffinden von Materialdefekten vorgesehen sind.

Durch die Herstellung des Kalibrierkörpers nach einem Produktionsverfahren, das mindestens einen gleichen Verfahrensschritt aufweist wie Fertigungsverfahren, nach dem das zu untersuchende Erzeugnis gefertigt wird, lassen sich in dem Kalibrierkörper die im den Erzeugnis zu untersuchenden Materialänderungen besonders genau nachbilden und darüber hinaus außerhalb des Bereichs der Materialveränderung dieselben oder zumindest ähnliche Materialeigenschaften ausbilden wie in dem zu untersuchenden Erzeugnis. Der Verfahrensschritt bzw. die Verfahrensschritte umfasst bzw. umfassen zweckmäßigerweise die Wärmebehandlung, beispielsweise bei der Brammenerwärmung oder beim Normalisieren, und/oder die Umformung, vorzugsweise einen Kalt- oder Warmwalzprozess, Schmieden, Tiefziehen und/oder eine thermomechanische Umformung, z.B. thermomechanisches Walzen. Vorteilhaft wird bei der gleichen Umformung die räumliche Form des Bereichs des Kalibrierkörpers in gleicher Weise verändert wie in dem Erzeugnis.

In einer besonders bevorzugten Ausgestaltung der Erfindung wird der Kalibrierkörper nach einem Produktionsverfahren hergestellt, das mehrere oder sämtliche gleiche Verfahrensschritte aufweist wie ein Fertigungsverfahren, nach dem das zu untersuchende Erzeugnis gefertigt wird.

In einer Ausführungsform der Erfindung wird die Materialänderung bzgl. ihrer chemischen Zusammensetzung und/oder einer räumlichen Form des Bereichs, insbesondere seiner Länge, Breite und/oder Tiefe des Bereichs, derart vorgesehen, dass sie ähnlich ausgeprägt ist wie die in dem Erzeugnis aufzufindende Materialänderung. Vorzugsweise weisen die Änderung der chemischen Zusammensetzung und/oder der räumlichen Form des Bereichs die gleiche Größenordnung auf wie die in dem Erzeugnis zu erfassende Änderung.

In einer bevorzugten Ausführungsform der Erfindung wird die Materialeigenschaft in einem oberflächennahen, sich von einer Oberfläche des Halbzeugs hinein erstreckenden Bereich lediglich bis in eine Tiefe von 3 mm, besonders bevorzugt bis in eine Tiefe von 1 mm, verändert. Als vorteilhaft erweist sich ein solcher Kalibrierkörper insbesondere für eine Vorrichtung, die zum Auffinden einer Änderung an einer Oberfläche des Erzeugnisses, insbesondere zur Bestimmung einer Änderung der Härte, vorgesehen ist.

Der Bereich bis in eine Tiefe von 3 mm eignet sich insbesondere, um eine Aufhärtung der Oberfläche des Erzeugnisses, die zu einer lokalen Versprödung des Stahlblechs und ggf. einer daraus resultierenden Rissbildung führen kann, aufzufinden.

In einer Ausgestaltung der Erfindung wird in den Bereich in das Halbzeug ein die Materialeigenschaft ändernder Stoff, in dem Fall, dass das Halbzeug aus Stahl gebildet ist, vorzugsweise Kohlenstoff, eingebracht, um die in dem Erzeugnis zu erfassenden Änderungen nachzubilden.

Zweckmäßigerweise wird dazu ein, vorzugsweise Kohlenstoff aufweisendes, Veränderungsmittel, aus dem der Stoff in das Halbzeug gebracht werden kann, auf das Halbzeug aufgebracht.

In einer Ausführungsform wird das Veränderungsmittel durch ein Pulver, vorzugsweise ein Kokspulver oder ein zum Einsatzhärten eines Stahlprodukts vorgesehenes Aufkohlungspulver, oder eine Paste gebildet.

Zweckmäßigerweise werden unterschiedliche Veränderungsmittel, aus denen der Stoff unterschiedlich schnell und/oder in unterschiedlichen Mengen in den Bereich eindiffundiert genutzt, um in den Bereichen unterschiedliche Stoffgehalte und/oder räumliche Formen der Bereiche auszubilden. Es wäre auch denkbar, Mischungen unterschiedlicher Veränderungsmittel zu benutzen, z.B. eine Mischung bestehend aus 30 Gew.% Aufkohlungspulver und 70 Gew.% Kokspulver. Es versteht sich, dass durch Wahl der Form und Größe eines Oberflächenabschnitts, auf dem das Veränderungsmittel angeordnet wird, die Form des Bereichs der Materialänderung einstellbar ist.

In einer Ausgestaltung der Erfindung wird das Veränderungsmittel bei Anordnung auf der Oberfläche vor einer Außenatmosphäre, vorzugsweise einer Ofenatmosphäre, geschützt, um zu vermeiden, dass es bei einer Wärmebehandlung verbrennt. Dazu kann es vorzugsweise abgedeckt, eingeschweißt und/oder mit einem Schutzgas umspült werden. Eine Abdeckung könnte beispielsweise aus einem, vorzugsweise keramischen, Refraktärmaterial oder aus einem Metall, z.B. Stahl oder Gusseisen, gebildet sein.

Außerdem wäre es denkbar, als Ofenatmosphäre ein Schutzgas, z.B. Argon, zu verwenden, um das Veränderungsmittel zu schützen. Die Abdeckung des Veränderungsmittels ist dann nicht notwendig.

In einer weiteren Ausführungsform der Erfindung wird die Materialeigenschaft des Bereichs durch eine Wärmebehandlung des Halbzeugs verändert, die vorzugsweise vor einer Umformung des Halbzeugs erfolgt.

Zweckmäßigerweise erfolgt die Wärmebehandlung des Halbzeugs während einer derartigen Dauer, dass eine zuvor bestimmte Menge des Stoffs in den Bereich eingebracht und/oder der Stoff bis in eine vorbestimmte Tiefe und/oder einer lateralen Ausdehnung in das Halbzeug eingebracht wird. Es besteht die Möglichkeit, die Wärmebehandlung über einen längeren Zeitraum durchzuführen als bei der Herstellung des Erzeugnisses üblicherweise vorgesehen ist. Dies ist insbesondere bei dem aus Stahl gebildeten Halbzeug vorteilhaft, da dadurch sowohl eine größere Menge als auch eine größere Eindringtiefe des eindiffundierenden Kohlenstoffs in den Bereich erreicht werden kann als dies mit der Wärmebehandlungsdauer, die für das Erzeugnis vorgesehen ist, möglich ist. Da sich eine Änderung der Wärmebehandlungsdauer bei der Herstellung des Kalibrierkörpers nicht weiter auswirkt, können außerhalb des gezielt veränderten Bereichs gleiche oder nahezu gleiche Eigenschaften in dem Kalibrierkörper und dem Erzeugnis erzielt werden.

Zweckmäßigerweise wird die Materialeigenschaft in dem Bereich derart verändert und/oder die Tiefe des Bereichs derart eingestellt, dass die in dem Erzeugnis zu detektierende Materialeigenschaft bzw. deren Tiefe nachgebildet wird. Vorteilhaft ermöglicht dies eine besonders genaue Kalibrierung des Untersuchungsverfahrens, da die in dem Erzeugnis aufzufindende Defektgröße und/oder -tiefe in dem Kalibrierkörper vorhanden ist.

In einer weiteren Ausführungsform wird das Halbzeug zur Herstellung des Kalibrierkörpers aus einer Bramme, einem Blech, einem Grobblech oder einem Block gebildet.

Zweckmäßigerweise wird der Kalibrierkörper hergestellt derart, dass er die gleichen oder ähnliche Abmessungen und/oder eine gleiche oder ähnliche Form wie das Erzeugnis aufweist. Zur Herstellung des Kalibrierkörpers und des Erzeugnisses lässt sich vorteilhaft dieselbe Vorrichtung nutzten. Außerdem wird für die Kalibrierung des Untersuchungsverfahrens kein Umbau der Vorrichtung notwendig.

In einer Ausgestaltung der Erfindung werden in dem Halbzeug mehrere Bereiche gebildet und die Materialeigenschaften in den Bereichen unterschiedlich geändert, wobei die Bereiche unterschiedliche Formen haben, unterschiedliche Gehalte des Stoffs aufweisen können und/oder sich von der Oberfläche aus unterschiedlich weit in das Halbzeug hinein erstrecken. Vorteilhaft lässt sich der Kalibrierkörper damit nutzen, um einen Grenzwert bei einer Messung mit dem Untersuchungsverfahren aufzufinden und festzulegen. Ferner kann mittels eines einzigen Kalibrierkörpers eine Vielzahl möglicher in dem Erzeugnis aufzufindender Änderungen und/oder deren Ausdehnung in dem Halbzeug bzw. Kalibrierkörper gebildet werden.

Zweckmäßigerweise werden auf unterschiedlichen Abschnitten der Oberfläche unterschiedliche Veränderungsmittel aufgebracht, um in den Bereichen die Materialeigenschaften unterschiedlich zu verändern.

Der erfindungsgemäße Kalibrierkörper eignet insbesondere zur Kalibrierung von Verfahren zur Untersuchung eines Prozesses zur Produktion von Stahlbrammen für die Grobblechproduktion, bei dem es in seltenen Fällen zu lokalen Kohlenstoffanreicherungen an der Brammenoberfläche kommen kann. Solche Kohlenstoffanreicherungen können sich in Ihrer Ausprägung durch ihre Form, insbesondere die Länge, Breite und/oder Tiefe der Aufkohlung sowie im maximal erreichten Kohlenstoffgehalt unterscheiden. Die Aufkohlung hat eine Änderung der lokalen mechanischen Eigenschaften am fertigen Blech zur Folge, die sich vor allem in einem Anstieg der Oberflächenhärte äußert und die z.B. mittels elektromagnetischer Oberflächenuntersuchungsverfahren detektiert werden können. Grundsätzlich liegt diesen Oberflächenuntersuchungsverfahren aber nicht eine direkte Messung der Härte zu Grunde, sondern es wird vielmehr eine vergleichende Messung zwischen unterschiedlichen Werkstoffzuständen vorgenommen. Eine Kalibrierung der Oberflächenuntersuchungsvorrichtung, mit der das Oberflächenuntersuchungsverfahren durchgeführt wird, mit dem die zu unterscheidenden Werkstoffzustände aufweisenden, erfindungsgemäßen Kalibrierkörper, ist daher notwendig.

Es versteht sich, dass das erfindungsgemäße Verfahren auch zur Herstellung eines Kalibrierkörpers aus einem anderen Werkstoff als Stahl, z.B. aus Nichteisenmetallen oder deren Legierungen, benutzt und dazu ein Halbzeug aus dem jeweiligen Werkstoff verwendet werden könnte.

Die Erfindung wird nachfolgend anhand eines Ausführungsbeispiels und der beiliegenden, sich auf das Ausführungsbeispiel beziehenden Zeichnungen näher erläutert. Es zeigen:
- Fig. 1: ein Halbzeug zur Herstellung eines Kalibrierkörpers in Draufsicht, und
- Fig. 2: einen Querschnitt durch das Halbzeug.

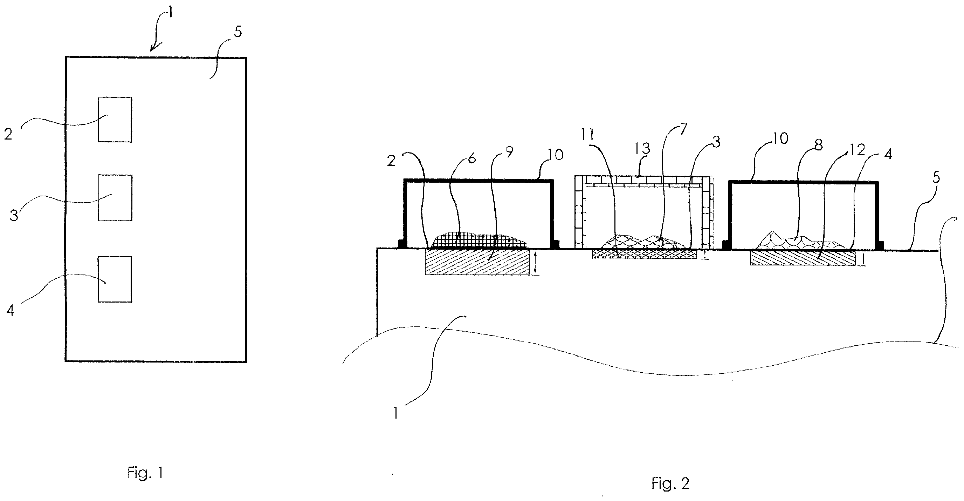

Eine in Fig. 1 in Draufsicht gezeigte Stahlbramme 1, aus der ein Kalibrierblech hergestellt werden soll, weist eine Oberfläche 5 und drei Oberflächenabschnitte 2,3,4 auf. Diese Oberflächenabschnitte 2,3,4 bilden Außenflächen von drei in Fig. 2 gezeigten Bereichen 9,11,12 der Stahlbramme 1, in die unterschiedliche Änderungen des Kohlenstoffgehalts zur Erhöhung der Härte eingebracht werden sollen.

Aus weiteren, nicht gezeigten Stahlbrammen, die aus dem gleichen Material wie die Stahlbramme 1 gebildet sind und die die gleiche Form aufweisen wie die Stahlbramme 1, werden nach den gleichen Fertigungsschritten, nach denen der Kalibrierkörper hergestellt wird, Stahlbleche gefertigt. Die Stahlbleche werden mit einem Untersuchungsverfahren untersucht, zu dessen Kalibrierung der Kalibrierkörper vorgesehen ist. Die Stahlbrammen für die Stahlbleche werden der gleichen Wärmebehandlung und der gleichen Umformung durch Warmwalzen wie die Stahlbramme 1 unterzogen.

Im Folgenden wird ein erfindungsgemäßes Verfahren zur Herstellung des Kalibrierblechs beschrieben:
Auf die in Fig. 2 im Querschnitt gezeigte Stahlbramme 1 wird auf den Oberflächenabschnitt 2 ein Aufkohlungspulver 6, auf den Oberflächenabschnitt 3 gemahlener Koks 7 und auf den Oberflächenabschnitt 4 eine Pulvermischung 8 bestehend aus 40 Gew.% Aufkohlungspulver und 60 Gew.% gemahlenem Koks aufgebracht.

Die Oberflächenabschnitte 2,3,4 werden nach Auflegen der Pulver 6,7,8 gasdicht abgedeckt, um sie von Sauerstoff und damit vor Verbrennung in einer Ofenatmosphäre zu schützen. Dazu wird eine aus einem Metall wie beispielsweise Stahl gebildete, quaderförmige Abdeckung 10 auf die Oberfläche 5 aufgesetzt und anschließend mit der Stahlbramme 1 verschweißt.

Bei der Wärmebehandlung der Stahlbramme 1 in einem Wärmebehandlungsofen diffundiert Kohlenstoff aus dem Aufkohlungspulver 6, dem Kokspulver 7 und der Pulvermischung 8 durch die Oberflächenabschnitte 2,3,4 hindurch in die oberflächennahen Bereiche 9,11,12 und ändert dort lokal bis zu einer Eindringtiefe t₁, t₂, t₃ den Kohlenstoffgehalt. Aufgrund der stofflichen Unterschiede zwischen dem Aufkohlungspulver 6, dem Koks 7 und der Pulvermischung 8 unterscheiden sich die Bereiche 9,11,12 durch ihre jeweiligen Kohlenstoffgehalte und die Größe der Eindringtiefen t₁, t₂, t₃.

Nach der Wärmebehandlung werden sämtliche Abdeckungen 10,13 sowie die Pulverreste von den Oberflächenabschnitten 2,3,4, entfernt. Anschließend wird die Stahlbramme 1 warmgewalzt.

Unterhalb der Oberflächenabschnitte 2,3,4 weist der Kalibrierkörper in den Bereichen 9,11,12 unterschiedliche Kohlestoffgehalte auf. Da sowohl der Kalibrierkörper als auch das Stahlblech nach den gleichen Verfahrensschritten hergestellt wurden, weisen beide mit Ausnahme der Bereiche 9,11,12 das gleiche Gefüge und damit gleiche Eigenschaften auf. Dadurch kann das Untersuchungsverfahren gezielt mit Hinblick auf eine in dem zu untersuchenden Stahlblech auftretende, lokale Veränderung des Kohlenstoffgehalts, die als Defekt erkannt werden soll, kalibriert werden.

Mögliche Untersuchungsverfahren wären beispielsweise eine Wirbelstromprüfung oder eine Ultraschallprüfung.

Alternativ wäre es möglich, eine Abdeckung 13 aus einem Keramikmaterial, z.B. aus einer Feuerfestkeramik oder einem Refraktärmaterial, auszubilden. Diese Abdeckung wird auch auf die Oberfläche 5 aufgesetzt und mit einem (hier nicht gezeigten) Mörtel mit der Stahlbramme 1 verbunden.

Es versteht sich, dass auch mehr als drei Oberflächenabschnitte 2,3,4 auf der Oberfläche 5 gebildet sein können. Auch wäre es möglich, dass andere Kohlenstoff aufweisende Pulver und/oder deren Mischungen auf Oberflächenabschnitte der Stahlbramme 1 aufgebracht werden, um den Kohlenstoffanteil der Bereiche 9,11,12 und/oder die Eindringtiefe t₁,t₂,t₃ zu verändern.

Ferner wäre es denkbar, dass das Verfahren zur Herstellung des Kalibrierblechs nicht nur zwei Verfahrensschritte umfasst, sondern mehrere Wärmebehandlungen und/oder mehrere Umformungen.

## Patentansprüche

1. Verfahren zur Herstellung eines, insbesondere aus Stahl oder einem anderen Metall gebildeten, Kalibrierkörpers für ein Untersuchungsverfahren, bei dem der Kalibrierkörper aus einem Material gebildet wird und eine Eigenschaft des Materials in mindestens einem Bereich (9,11,12) eines aus dem Material gebildeten Halbzeugs (1) verändert wird, wobei das Material, aus dem der Kalibrierkörper gebildet wird, zur Herstellung eines mittels des Oberflächenuntersuchungsverfahrens zu untersuchenden Erzeugnisses vorgesehen ist, **dadurch gekennzeichnet,**
**dass** die Materialeigenschaft lediglich in einem oberflächennahen, sich von einer Oberfläche (5,2,3,4) des Kalibrierkörpers (9,11,12) aus in das Halbzeug (1) hinein erstreckenden Bereich verändert wird und der lediglich in dem Bereich veränderte Kalibrierkörper für ein Oberflächenuntersuchungsverfahren vorgesehen wird, wobei der Kalibrierkörper nach einem Produktionsverfahren hergestellt wird, das mindestens einen gleichen Verfahrensschritt wie ein Fertigungsverfahren aufweist, nach dem das zu untersuchende Erzeugnis gefertigt wird.

2. Verfahren nach Anspruch 1,
**dadurch gekennzeichnet,**
**dass** die Materialeigenschaft in dem oberflächennahen, sich von der Oberfläche (5,2,3,4) aus in das Halbzeug (1) hinein erstreckenden Bereich (9,11,12) lediglich bis in eine Tiefe von 3 mm verändert wird.

3. Verfahren nach Anspruch 1 oder 2,
**dadurch gekennzeichnet,**
**dass** in den Bereich (9,11,12) in das Halbzeug (1) ein die Materialeigenschaft ändernder Stoff, vorzugsweise Kohlenstoff, eingebracht wird.

4. Verfahren nach Anspruch 3,
**dadurch gekennzeichnet,**
**dass** ein, vorzugsweise Kohlenstoff aufweisendes, Veränderungsmittel (6,7,8), aus dem der Stoff in das Halbzeug gebracht werden kann, auf das Halbzeug (1) aufgebracht wird.

5. Verfahren nach Anspruch 4,
**dadurch gekennzeichnet,**
**dass** das Veränderungsmittel (6,7,8) durch ein Pulver, vorzugsweise ein Kokspulver (7) und/oder ein Aufkohlungspulver, oder eine Paste gebildet wird.

6. Verfahren nach Anspruch 4 oder 5,
**dadurch gekennzeichnet,**
**dass** das Veränderungsmittel (6,7,8) bei Anordnung auf der Oberfläche (5,2,3,4) vor einer Außenatmosphäre, vorzugsweise einer Ofenatmosphäre, geschützt wird, wobei das Veränderungsmittel (6,7,8) vorzugsweise abgedeckt, eingeschweißt und/oder mit einem Schutzgas umspült wird.

7. Verfahren nach einem der Ansprüche 1 bis 6,
**dadurch gekennzeichnet,**
**dass** die Materialeigenschaft durch eine Wärmebehandlung des Halbzeugs (1) verändert wird, die vorzugsweise vor einer Umformung des Halbzeugs, besonders bevorzugt vor einem Kalt- oder Warmwalzprozess, erfolgt.

8. Verfahren nach einem der Ansprüche 1 bis 7,
**dadurch gekennzeichnet,**
**dass** der Kalibrierkörper nach einem Produktionsverfahren hergestellt wird, das mehrere oder sämtliche gleiche Verfahrensschritte aufweist wie das Fertigungsverfahren, nach dem das zu untersuchende Erzeugnis gefertigt wird.

9. Verfahren nach einem der Ansprüche 1 bis 8,
**dadurch gekennzeichnet,**
**dass** das Halbzeug (1) zur Herstellung des Kalibrierkörpers aus einer Bramme (1), einem Blech, einem Grobblech oder einem Block gebildet wird.

10. Verfahren nach einem der Ansprüche 2 bis 9,
**dadurch gekennzeichnet,**
**dass** in dem Halbzeug (1) mehrere Bereiche (9,11,12) gebildet werden und die Materialeigenschaften in den Bereichen (9,11,12) unterschiedlich geändert werden, wobei sich die Bereiche (9,11,12) von der Oberfläche (5,2,3,4) aus unterschiedlich weit (t₁, t₂, t₃) in das Halbzeug (1) hinein erstrecken, unterschiedliche laterale Ausdehnungen und/oder unterschiedliche Gehalte des Stoffs aufweisen.

11. Kalibrierkörper, insbesondere aus Stahl gebildeter Kalibrierkörper, zur Kalibrierung einer Vorrichtung zur Durchführung einer zerstörungsfreien Untersuchung eines Erzeugnisses, der aus einem zur Herstellung des Erzeugnisses vorgesehenen Material gebildet ist und mindestens einen Bereich (9,11,12) aufweist, in dem eine veränderte Materialeigenschaft vorgesehen ist, wobei das Material zur Herstellung eines mittels des Oberflächenuntersuchungsverfahrens zu untersuchenden Erzeugnisses vorgesehen ist,
**dadurch gekennzeichnet,**
**dass** der Kalibrierkörper für ein Oberflächenuntersuchungsverfahren vorgesehen ist, wobei die Materialeigenschaft lediglich in einem oberflächennahen, sich von einer Oberfläche (5,2,3,4) des Kalibrierkörpers (9,11,12) aus in das Halbzeug (1) hinein erstreckenden Bereich verändert ist und der Kalibrierkörper nach einem Produktionsverfahren hergestellt ist, das mindestens einen gleichen Verfahrensschritt wie ein Fertigungsverfahren aufweist, nach dem das zu untersuchende Erzeugnis gefertigt ist.

12. Verwendung eines Kalibrierkörpers nach Anspruch 11 zur Kalibrierung einer Vorrichtung zur, vorzugsweise zerstörungsfreien, Untersuchung eines Erzeugnisses.

## Claims

1. Method for producing a calibration body for an examination method, said calibration body being formed in particular from steel or another metal, in which method the calibration body is formed from a material and a property of the material is altered in at least one region (9, 11, 12) of a semifinished product (1) formed from the material, wherein the material from which the calibration body is formed is provided for production of a product to be examined by means of the surface examination method, **characterized**
**in that** the material property is altered merely in a region which is close to the surface and which extends from a surface (5, 2, 3, 4) of the calibration body (9, 11, 12) into the semifinished product (1), and the calibration body which has been altered merely in the region is provided for a surface examination method, wherein the calibration body is produced by a production method which has at least one same method step as a manufacturing method by which the product to be examined is manufactured.

2. Method according to Claim 1,
**characterized**
**in that** the material property in the region (9, 11, 12) which is close to the surface and which extends from the surface (5, 2, 3, 4) into the semifinished product (1) is altered merely up to a depth of 3 mm.

3. Method according to Claim 1 or 2, **characterized**
**in that** a substance that changes the material property, preferably carbon, is introduced into the region (9, 11, 12) into the semifinished product (1).

4. Method according to Claim 3,
**characterized**
**in that** an alteration means (6, 7, 8), which preferably comprises carbon and from which the substance can be introduced into the semifinished product, is applied to the semifinished product (1).

5. Method according to Claim 4,
**characterized**
**in that** the alteration means (6, 7, 8) is formed by a powder, preferably a coke powder (7) and/or carburizing powder, or a paste.

6. Method according to Claim 4 or 5, **characterized**
**in that** the alteration means (6, 7, 8), during arrangement on the surface (5, 2, 3, 4), is protected from an external atmosphere, preferably a furnace atmosphere, wherein the alteration means (6, 7, 8) is preferably covered, welded in and/or flowed around by a protective gas.

7. Method according to one of Claims 1 to 6, **characterized**
**in that** the material property is altered by a heat treatment of the semifinished product (1), said heat treatment preferably being carried out prior to a forming operation of the semifinished product, particularly preferably prior to a cold or hot rolling process.

8. Method according to one of Claims 1 to 7, **characterized**
**in that** the calibration body is produced by a production method which has a plurality of same method steps or all the same method steps as the manufacturing method by which the product to be examined is manufactured.

9. Method according to one of Claims 1 to 8, **characterized**
**in that** the semifinished product (1) for producing the calibration body is formed from a slab (1), a sheet, a thick plate or a block.

10. Method according to one of Claims 2 to 9, **characterized**
**in that** a plurality of regions (9, 11, 12) are formed in the semifinished product (1) and the material properties in the regions (9, 11, 12) are changed to a differing extent, wherein the regions (9, 11, 12) extend from the surface (5, 2, 3, 4) to differing depths (t₁, t₂, t₃) into the semifinished product (1), have different lateral extents and/or different contents of the substance.

11. Calibration body, in particular calibration body formed from steel, for calibrating an apparatus for performing a non-destructive examination of a product, said calibration body being formed from a material which is provided for production of the product and having at least one region (9, 11, 12) in which an altered material property is provided, wherein the material is provided for production of a product to be examined by means of the surface examination method,
**characterized**
**in that** the calibration body is provided for a surface examination method, wherein the material property is altered merely in a region which is close to the surface and which extends from a surface (5, 2, 3, 4) of the calibration body (9, 11, 12) into the semifinished product (1), and the calibration body is produced by a production method which has at least one same method step as a manufacturing method by which the product to be examined is manufactured.

12. Use of a calibration body according to Claim 11 for calibrating an apparatus for the, preferably non-destructive, examination of a product.

## Revendications

1. Procédé de fabrication d'un corps de calibrage, formé en particulier d'acier ou d'un autre métal, pour un procédé d'examen, dans lequel le corps de calibrage est formé d'un matériau et une propriété du matériau est modifiée dans au moins une zone (9, 11, 12) d'un produit semi-fini (1) formé à partir dudit matériau, le matériau constituant le corps de calibrage étant prévu pour la fabrication d'un produit à examiner au moyen du procédé d'examen de surface,
**caractérisé en ce que**
la propriété du matériau n'est modifiée que dans une zone proche de la surface, s'étendant à partir d'une surface (5, 2, 3, 4) du corps de calibrage (9, 11, 12) jusque dans le produit semi-fini (1), et le corps de calibrage modifié uniquement dans ladite zone est prévu pour un procédé d'examen de surface, le corps de calibrage étant fabriqué selon un procédé de production qui présente au moins une même étape de procédé qu'un procédé de fabrication selon lequel le produit à examiner est fabriqué.

2. Procédé selon la revendication 1,
**caractérisé en ce que**
la propriété du matériau n'est modifiée que jusqu'à une profondeur de 3 mm dans la zone (9, 11, 12) proche de la surface, s'étendant à partir de la surface (5, 2, 3, 4) jusque dans le produit semi-fini (1).

3. Procédé selon la revendication 1 ou 2,
**caractérisé en ce que**
une substance modifiant la propriété du matériau, de préférence du carbone, est introduite dans le produit semi-fini (1) dans la zone (9, 11, 12).

4. Procédé selon la revendication 3,
**caractérisé en ce que**
un agent de modification (6, 7, 8), de préférence contenant du carbone, à partir duquel la substance peut être introduite dans le produit semi-fini, est appliqué sur le produit semi-fini (1).

5. Procédé selon la revendication 4,
**caractérisé en ce que**
l'agent de modification (6, 7, 8) est formé par une poudre, de préférence par une poudre de coke (7) et/ou une poudre de cémentation, ou par une pâte.

6. Procédé selon la revendication 4 ou 5,
**caractérisé en ce que**
l'agent de modification (6, 7, 8), lorsqu'il est appliqué sur la surface (5, 2, 3, 4), est protégé d'une atmosphère extérieure, de préférence une atmosphère de four, l'agent de modification (6, 7, 8) étant de préférence recouvert, scellé et/ou baigné dans un gaz protecteur.

7. Procédé selon l'une des revendications 1 à 6,
**caractérisé en ce que**
la propriété du matériau est modifiée par un traitement thermique du produit semi-fini (1), qui s'effectue de préférence avant une transformation du produit semi-fini, de manière particulièrement préférée avant un processus de laminage à froid ou à chaud.

8. Procédé selon l'une des revendications 1 à 7,
**caractérisé en ce que**
le corps de calibrage est fabriqué selon un procédé de production qui présente plusieurs ou toutes les mêmes étapes de procédé que le procédé de fabrication selon lequel le produit à examiner est fabriqué.

9. Procédé selon l'une des revendications 1 à 8,
**caractérisé en ce que**
**que** le produit semi-fini (1) pour la fabrication du corps de calibrage est formé à partir d'une brame (1), d'une tôle, d'une tôle forte ou d'un bloc.

10. Procédé selon l'une des revendications 2 à 9,
**caractérisé en ce que**
plusieurs zones (9, 11, 12) sont formées dans le produit semi-fini (1), et les propriétés du matériau dans les zones (9, 11, 12) sont modifiées différemment, les zones (9, 11, 12) s'étendant à partir de la surface (5, 2, 3, 4) sur une profondeur différente (t₁, t₂, t₃) jusque dans le produit semi-fini (1) et présentant des extensions latérales différentes et/ou des teneurs différentes en ladite substance.

11. Corps de calibrage, en particulier corps de calibrage formé d'acier, destiné à calibrer un dispositif pour réaliser un examen non destructif d'un produit, qui est formé d'un matériau prévu pour la fabrication du produit et qui présente au moins une zone (9, 11, 12) dans laquelle est prévue une propriété modifiée du matériau, le matériau étant prévu pour fabriquer un produit à examiner au moyen du procédé d'examen de surface,
**caractérisé en ce que**
le corps de calibrage est prévu pour un procédé d'examen de surface, la propriété du matériau n'est modifiée que dans une zone proche de la surface, s'étendant à partir de la surface (5, 2, 3, 4) du corps de calibrage (9, 11, 12) jusque dans le produit semi-fini (1), et le corps de calibrage est fabriqué selon un procédé de production qui présente au moins une même étape de procédé que le procédé de fabrication selon lequel le produit à examiner est fabriqué.

12. Utilisation d'un corps de calibrage selon la revendication 11 pour calibrer un dispositif pour l'examen, de préférence non destructif, d'un produit.
